# EUROPÄISCHE PATENTSCHRIFT

(11) **EP 3 245 112 B1**
(45) Veröffentlichungstag und Bekanntmachung des Hinweises auf die Patenterteilung: **19.09.2018**
(21) Anmeldenummer: 15819791.3
(22) Anmeldetag: 19.12.2015
(51) Int. Cl.: B60W 30/14, B60W 50/08, B60W 50/00, B60W 30/18

(54) **VERFAHREN ZUM BETRIEB EINES LÄNGSFÜHRENDEN FAHRERASSISTENZSYSTEMS EINES KRAFTFAHRZEUGS UND KRAFTFAHRZEUG**
METHOD FOR OPERATING A LONGITUDINALLY GUIDING DRIVER ASSISTANCE SYSTEM OF A MOTOR VEHICLE AND MOTOR VEHICLE
PROCÉDÉ PERMETTANT DE FAIRE FONCTIONNER UN SYSTÈME D'ASSISTANCE AU CONDUCTEUR LONGITUDINAL D'UN VÉHICULE AUTOMOBILE ET VÉHICULE AUTOMOBILE

(30) Priorität: 17.01.2015 DE 102015000539
(43) Veröffentlichungstag der Anmeldung: 22.11.2017
(73) Patentinhaber: Audi AG, 85045 Ingolstadt (DE)
(72) Erfinder: SCHUBERTH, Stefan, 85080 Gaimersheim (DE); HELD, Ralf, 85072 Eichstätt (DE); BRÜCKLMAIER, Florian, 84048 Mainburg (DE)
(74) Vertreter: Herbst, Matthias Heinz
(86) Internationale Anmeldenummer: PCT/EP2015/002570
(87) Internationale Veröffentlichungsnummer: WO 2016/112945

(56) Entgegenhaltungen:
- EP-A2- 2 527 222
- WO-A1-2010/139383
- DE-A1-102007 018 733
- DE-A1-102010 018 097
- DE-A1-102013 205 609
- DE-A1-102013 216 705

## Beschreibung

Die Erfindung betrifft ein Verfahren zum Betrieb eines längsführenden Fahrerassistenzsystems eines Kraftfahrzeugs, welches zur Regelung der Geschwindigkeit des Kraftfahrzeugs auf eine Regelgeschwindigkeit ausgebildet ist, wobei die Regelgeschwindigkeit in Abhängigkeit von die Betriebsumgebung, in der das Kraftfahrzeug aktuell betrieben wird, beschreibenden Umgebungsdaten von einer fahrerseitig vorgegebenen Wunschgeschwindigkeit auf eine für eine vorausliegende Betriebsumgebung vorgegebene und/oder aus den Umgebungsdaten ermittelbare Zielgeschwindigkeit veränderbar ist. Daneben betrifft die Erfindung ein Kraftfahrzeug.

Derartige längsführende Fahrerassistenzsysteme sind im Stand der Technik bereits bekannt. Beispiele hierfür sind Geschwindigkeitsregelanlagen (GRA), die häufig auch als Tempomat bezeichnet werden, und ACC-Systeme ("Adaptive Cruise Control"), die dann, wenn ein weiteres Kraftfahrzeug dem eigenen Kraftfahrzeug vorausfährt, auf einen Wunschabstand, insbesondere eine Wunschzeitlücke, zu diesem regeln. Bei derartigen längsführenden Fahrerassistenzsystemen gibt der Fahrer üblicherweise eine Wunschgeschwindigkeit vor, die immer dann, wenn es möglich ist, gehalten werden soll, das bedeutet, die Wunschgeschwindigkeit wird für den üblichen Betriebsfall als Regelgeschwindigkeit, auf die geregelt wird, festgelegt.

Moderne längsführende Fahrerassistenzsysteme bieten nun häufig eine Zusatzfunktion, über die gesetzliche und/oder anderweitig sinnvolle Geschwindigkeitsbegrenzungen in den Betriebsumgebungen, in denen das Kraftfahrzeug betrieben wird, erkannt werden können. Hierfür können Umgebungsdaten genutzt werden, die unterschiedlich ausgestaltet werden können. So ist es beispielsweise bekannt, aus digitalen Kartendaten eines Navigationssystems des Kraftfahrzeugs Daten über Geschwindigkeitsbegrenzungen, Richtgeschwindigkeiten und dergleichen auf bestimmten Streckenabschnitten auszulesen. Eine weitere Variante, die vorgeschlagen wurde, ist die Detektion von Geschwindigkeitsbegrenzungen für vorausliegende Betriebsumgebungen aufgrund von Kameradaten einer in dem Kraftfahrzeug verbauten Kamera. Beispielsweise können in einer Bildverarbeitung Verkehrsschilder und dergleichen erkannt und entsprechend verarbeitet werden. Wird eine derartige Geschwindigkeitsbegrenzung erkannt, die unterhalb der eingestellten Wunschgeschwindigkeit liegt, kann solange, wie die Geschwindigkeitsbegrenzung besteht, die Regelgeschwindigkeit auf eine der Geschwindigkeitsbegrenzung entsprechende Zielgeschwindigkeit gesetzt werden. Hat ein Fahrer beispielsweise eine Wunschgeschwindigkeit von 80 km/h eingestellt und nähert er sich einer geschlossenen Ortschaft, wird für das Durchfahren dieser Ortschaft als vorausliegende Betriebsumgebung die Regelgeschwindigkeit kurzzeitig auf eine Zielgeschwindigkeit von 50 km/h gesetzt, idealerweise so, dass die Zielgeschwindigkeit von 50 km/h bereits am Ortseingang, also an der Begrenzung der vorausliegenden Betriebsumgebung, erreicht wird.

Diese automatische Anpassung der Regelgeschwindigkeit verläuft nicht immer zur vollsten Zufriedenheit des Fahrers, insbesondere dann, wenn es lediglich um Richtgeschwindigkeiten geht, veraltete digitale Kartendaten eingesetzt werden oder Fehldetektionen von Verkehrsschildern vorliegen; auch bei sonstigen Geschwindigkeitsbegrenzungen ist von Fahrern häufig gewünscht, knapp schneller als diese Zielgeschwindigkeit fahren zu können. Mit anderen Worten muss die als Regelgeschwindigkeit eingestellte Zielgeschwindigkeit nicht zwangsläufig mit der für die Betriebsumgebung geltenden, gedachten Wunschgeschwindigkeit des Fahrers übereinstimmen.

Mithin wurden bereits längsführende Fahrerassistenzsysteme vorgeschlagen, bei denen eine zusätzliche Bedienmöglichkeit existiert, die es erlaubt, eine Offsetgeschwindigkeit zu der Zielgeschwindigkeit zu addieren, welche selbstverständlich grundsätzlich auch einen negativen Wert aufweisen kann. Beispielsweise kann ein Bedienhebel vorgesehen sein, über den der Fahrer den Offset in 5 km/h-Schritten einstellen kann. Die meisten dieser Funktionalitäten sehen vor, dass ein derartiger Offset für jede Umgebung innerhalb derselben neu gewählt werden muss, da die Erfahrung zeigt, dass die gewünschten Offsetgeschwindigkeiten für unterschiedliche Betriebsumgebungen auch für denselben Fahrer häufig unterschiedlich sind.

Dies kann nun dazu führen, dass zunächst an der Begrenzung der vorausliegenden Betriebsumgebung, für die auf die Zielgeschwindigkeit als Regelgeschwindigkeit geregelt werden soll, auf die Zielgeschwindigkeit heruntergebremst wird, um danach nach Wahl eines Offsets wieder zu beschleunigen. So kann es beispielsweise bei einer geschlossenen Ortschaft als Betriebsumgebung dazu kommen, dass zunächst auf eine Zielgeschwindigkeit von 50 km/h abgebremst wird, um danach wieder auf 55 km/h zu beschleunigen, nachdem der Fahrer über das Bedienelement eine Offsetgeschwindigkeit gewählt hat. Dies wirkt sich nicht nur nachteilig für den Komfort im Kraftfahrzeug aus, sondern auch auf den Treibstoffverbrauch durch das Abbremsen und das darauf folgende Beschleunigen.

Aus der DE 10 2007 018 733 A1 ist ein Verfahren zum Bestimmen einer Geschwindigkeitsfunktion zum Verzögern eines Fahrzeugs bekannt. Die Geschwindigkeitsfunktion, welche eine Geschwindigkeit des Fahrzeugs von einer Anfangsgeschwindigkeit zu einer Soll-Endgeschwindigkeit über einen Verzögerungsweg beschreibt, wird derart bestimmt, dass eine Verzögerungszeit, welche zum Verzögern des Fahrzeugs unter Verwendung der Geschwindigkeitsfunktion benötigt wird, maximal wird.

In der EP 2 527 222 A2 sind ein Kraftfahrzeug und ein Verfahren zum Betrieb eines längsführenden Fahrerassistenzsystems des Kraftfahrzeugs beschrieben, bei dem abhängig von wenigstens einem Regeldatum die Geschwindigkeit des Kraftfahrzeugs geregelt wird, wobei als weitere Regeldaten Kurvendaten bezüglich wenigstens einer als nächstes durch das Kraftfahrzeug zu durchfahrenden Kurve bei der Regelung berücksichtigt werden und wobei unter Berücksichtigung der Kurvendaten eine Komfortkurvengeschwindigkeit ermittelt wird, wobei eine Sollgeschwindigkeit des Kraftfahrzeugs an einem bestimmten Punkt der Kurve aus der Komfortkurvengeschwindigkeit ermittelt und bei der Regelung der Geschwindigkeit berücksichtigt wird.

Der Erfindung liegt die Aufgabe zugrunde, ein Betriebsverfahren für ein längsführendes Fahrerassistenzsystem anzugeben, das beim Abbremsen auf Zielgeschwindigkeiten als neue Regelgeschwindigkeiten einen komfortableren und bezüglich des Treibstoffverbrauchs optimierten Betrieb des Kraftfahrzeugs ermöglicht, insbesondere bei Nutzen einer Offsetfunktion.

Zur Lösung dieser Aufgabe ist bei einem Kraftfahrzeug der eingangs genannten Art erfindungsgemäß vorgesehen, dass bei einer Änderung der Regelgeschwindigkeit auf eine neue Zielgeschwindigkeit für eine vorausliegende Betriebsumgebung, zunächst für eine vorbestimmte Zeitspanne und/oder eine vorbestimmte Strecke in der vorausliegenden Betriebsumgebung auf eine zur aktuellen Geschwindigkeit des Kraftfahrzeugs hin von der Zielgeschwindigkeit abweichende Zwischengeschwindigkeit, die zwischen der aktuellen Geschwindigkeit des Kraftfahrzeugs und der Zielgeschwindigkeit liegt, geregelt wird, ehe nach Ablauf der Zeitspanne bzw. Überfahren der Strecke auf die Zielgeschwindigkeit geregelt wird.

Dabei wird mithin von einem längsführenden Fahrerassistenzsystem ausgegangen, welches, wie grundsätzlich bekannt, Umgebungsdaten auswertet, um vorgegebene Zielgeschwindigkeiten, die insbesondere Geschwindigkeitsbegrenzungen entsprechen, für vorausliegende Betriebsumgebungen, insbesondere Streckenabschnitte, festzustellen. Liegt diese Zielgeschwindigkeit unterhalb der Wunschgeschwindigkeit, wird die Regelgeschwindigkeit auf die Zielgeschwindigkeit erniedrigt. Erfindungsgemäß ist nun jedoch vorgesehen, nicht sofort auf diese neue Zielgeschwindigkeit als Regelgeschwindigkeit zu regeln, sondern zunächst eine Zwischengeschwindigkeit als Regelgeschwindigkeit heranzuziehen, die letztlich eine Toleranz symbolisiert, durch die alle Regelungen auf Zielgeschwindigkeiten, insbesondere hinsichtlich von Geschwindigkeitsbegrenzungen, etwas "verwaschen" werden. Das bedeutet, es wird an der Begrenzung der vorausliegenden Betriebsumgebung, insbesondere des Streckenabschnitts, nicht die exakte Zielgeschwindigkeit, sondern bei einer nötigen Absenkung der Geschwindigkeit des Kraftfahrzeugs auf die Zielgeschwindigkeit ein etwas größerer Wert, die Zwischengeschwindigkeit, eingeregelt. Wurde die Begrenzung der vorausliegenden Betriebsumgebung, auf die sich die Zielgeschwindigkeit bezieht, passiert, wird die korrekte Zielgeschwindigkeit, insbesondere die korrekte Geschwindigkeitsbegrenzung, nach einer endlichen, vorgegebenen Zeit, die über eine Zeitspanne und/oder eine Strecke definiert werden kann, korrekt eingeregelt. Es sei noch darauf hingewiesen, dass dann, wenn die aktuelle Geschwindigkeit des Kraftfahrzeugs zwischen der Zielgeschwindigkeit und einer beispielsweise vorgegebenen oder ermittelten Zwischengeschwindigkeit liegt, vorgesehen sein kann, auch unmittelbar auf die Zielgeschwindigkeit als Regelgeschwindigkeit zu regeln.

Dabei wird üblicherweise auf das Erreichen der Zwischengeschwindigkeit mit Erreichen einer Begrenzung der vorausliegenden Betriebsumgebung geregelt, das bedeutet, das üblicherweise aktuell eine höhere Geschwindigkeit als die Zwischengeschwindigkeit aufweisende Kraftfahrzeug, das sich noch außerhalb der vorausliegenden Betriebsumgebung, insbesondere des Streckenabschnitts, befindet, wird so abgebremst, dass die Zwischengeschwindigkeit (anstatt der Zielgeschwindigkeit) mit Erreichen der Begrenzung der vorausliegenden Betriebsumgebung eingestellt ist. Dies zeigt, dass es die vorliegende Erfindung vorteilhaft erlaubt, durch Entfall eines aktiven Bremsens oder zumindest Verkleinerung des Bremsanteils in der Geschwindigkeitsreduzierungszone, in der die Regelgeschwindigkeit über Freilauf- und Schleppmanöver einzuregeln ist, möglich ist, den Treibstoffverbrauch deutlich zu reduzieren. Nachdem die Zielgeschwindigkeit nicht an der Begrenzung der Betriebsumgebung erreicht werden muss, ergibt sich beispielsweise die Möglichkeit, allein durch Realisierung eines Schleppzustands (Motorbremse) oder gar eines Segelzustands (Freilauf) schon die Zwischengeschwindigkeit an der Begrenzung zu erreichen.

Weitere Vorteile ergeben sich in der Ausgestaltung, in der fahrerseitig eine Offsetgeschwindigkeit für die Betriebsumgebung einstellbar ist, wobei nach Wahl einer Offsetgeschwindigkeit in der Betriebsumgebung als Regelgeschwindigkeit die Zielgeschwindigkeit plus die Offsetgeschwindigkeit gewählt wird. Dies ist der eingangs diskutierte Fall, in der ein Fahrer für eine bestimmte Betriebsumgebung, also insbesondere einen bestimmten Streckenabschnitt, einen Offset zur Zielgeschwindigkeit wählen kann. Beträgt die Zielgeschwindigkeit beispielsweise 55 km/h, kann der Fahrer durch Wahl eines Offsets von 5 km/h dafür sorgen, dass auf eine Geschwindigkeit von 55 km/h als Regelgeschwindigkeit geregelt wird. Bislang führte dies dazu, dass zunächst auf 50 km/h abgebremst wurde, dann jedoch wieder auf 55 km/h beschleunigt wurde. Derartige Manöverwechsel sind im Rahmen der vorliegenden Erfindung geringer oder gar nicht mehr möglich, insbesondere dann, wenn die Zwischengeschwindigkeit der Zielgeschwindigkeit plus der Offsetgeschwindigkeit entspricht oder größer als die Zielgeschwindigkeit plus die Offsetgeschwindigkeit ist. Dann ergibt sich ein harmonisches Einstellen auf die vom Fahrer tatsächlich gewünschte Regelgeschwindigkeit unter Berücksichtigung der Zielgeschwindigkeit, da dem Fahrer innerhalb der vorbestimmten Zeitspanne bzw. innerhalb der vorbestimmten Strecke die Möglichkeit gegeben wird, die von ihm gewünschte Offsetgeschwindigkeit einzustellen und mithin die Regelgeschwindigkeit entsprechend zu korrigieren.

Mithin ist zusammenfassend eine flüssigere und komfortablere Fahrweise mit geringerem Treibstoffverbrauch möglich, die mit weniger Wechseln zwischen Segel-, Schlepp- und Bremszuständen auskommt und gezielt einen Zeitraum zur Verfügung stellt, in dem der Fahrer eine Offsetgeschwindigkeit wählen kann.

Dabei kann die Zwischengeschwindigkeit aus einem Toleranzintervall um die Zielgeschwindigkeit als eine entsprechende Grenze desselben ermittelt werden. Die Verwendung eines Toleranzintervalls ist insbesondere dann zweckmäßig, wenn Zielgeschwindigkeiten sowohl durch Beschleunigung als auch durch Verlangsamungsvorgänge erreicht werden sollen, so dass dann sowohl für eine Annäherung von oben als auch für eine Annäherung von unten an die Zielgeschwindigkeit eine Zwischengeschwindigkeit bestimmt werden kann. Selbstverständlich ist es auch denkbar, das Toleranzintervall symmetrisch zu wählen.

Die Zwischengeschwindigkeit kann, insbesondere in Form eines Toleranzintervalls, fahrerseitig einstellbar sein. Das bedeutet, der Fahrer kann mithin angeben, wie weit er zu Beginn einer Betriebsumgebung von der dort vorgesehenen Zielgeschwindigkeit abweichen möchte. Eine solche Voreinstellung kann prozentual erfolgen, es ist jedoch auch denkbar, feste Offsetwerte einstellbar zu machen.

In bevorzugter Ausgestaltung ist jedoch vorgesehen, dass die Zwischengeschwindigkeit in Abhängigkeit von den und/oder weiteren Umgebungsdaten und/oder von der Zielgeschwindigkeit und/oder der aktuellen Geschwindigkeit und/oder sonstigen Betriebsdaten des Kraftfahrzeugs gewählt wird. Dabei sind verschiedene Ansatzpunkte denkbar. Beispielsweise kann es zweckmäßig sein, die Zwischengeschwindigkeit, insbesondere innerhalb eines erlaubten Intervalls, so zu wählen, dass möglichst ohne einen aktiven Bremseingriff eine Einregelung bei der Begrenzung der Betriebsumgebung erfolgt ist. Derartiges ist insbesondere nützlich, wenn prädiktive Betriebsstrategien für einen besonders niedrigen Treibstoffverbrauch verwendet werden. Die Zwischengeschwindigkeit kann jedoch auch abhängig von der Zielgeschwindigkeit gewählt werden, beispielsweise als um einen Offsetwert von 10 % der Zielgeschwindigkeit verschoben. Möglich ist es auch, die Umgebungsdaten, die der Ermittlung der Zielgeschwindigkeit zugrunde liegen, und/oder weitere Umgebungsdaten heranzuziehen, um eine geeignete Zwischengeschwindigkeit zu bestimmen. Hierzu kann beispielsweise entschieden werden, ob es sich um eine gesetzliche Geschwindigkeitsbegrenzung handelt, die enger einzuhalten ist, oder ob es sich um eine Richtgeschwindigkeit oder dergleichen handelt; weitere Umgebungsdaten, die eingehen können, können beispielsweise die Sicherheit bei einer Detektion von Verkehrsschildern oder dergleichen beschreiben. Es sei angemerkt, dass es selbstverständlich auch möglich ist, fest vorgegebene Zwischengeschwindigkeiten für bestimmte Zielgeschwindigkeiten zu verwenden oder gar einen insgesamt festen Offsetwert zu wählen, beispielsweise die Zwischengeschwindigkeit immer als 5 km/h von der Zielgeschwindigkeit abweichend zu wählen.

Besondere Vorteile ergeben sich dann, wenn die Wahl der Zwischengeschwindigkeit tatsächlich in prädiktive Betriebsstrategien zum möglichst energiesparenden Erreichen der Zwischengeschwindigkeit an der Begrenzung der vorausliegenden Betriebsumgebung eingebettet wird. So ist beispielsweise auch ein deutlicheres. Verletzen einer Zielgeschwindigkeit möglich, insbesondere bei einer nicht einer gesetzlichen Geschwindigkeitsbegrenzung entsprechenden Zielgeschwindigkeit, wenn mit einem Schlepp- oder Segelmanöver innerhalb der vorbestimmten Zeitspanne innerhalb der vorausliegenden Betriebsumgebung die korrekte Zielgeschwindigkeit erreicht werden kann. Dies ist einem besonders energieeffizienten Betrieb des Kraftfahrzeugs zuträglich.

Eine Weiterbildung der Erfindung sieht vor, dass auf die Zwischengeschwindigkeit nur von der der aktuellen Geschwindigkeit des Kraftfahrzeugs zu Beginn der Regelung auf die Zwischengeschwindigkeit zugewandten Seite geregelt wird oder dass bevorzugt auf ein Geschwindigkeitsintervall, das aus der Zwischengeschwindigkeit und der Zielgeschwindigkeit gebildet wird, geregelt wird. Da dann, wenn der Fahrer nicht, wie beschrieben, eine Offsetgeschwindigkeit einstellen möchte, ohnehin das Ziel der Regelung kurzfristig die Zielgeschwindigkeit als Regelgeschwindigkeit sein wird, müssen Abweichungen von der Zwischengeschwindigkeit in Richtung der Zielgeschwindigkeit nicht zwangsläufig nachgeregelt werden. Beispielsweise kann innerhalb der vorbestimmten Zeitspanne bzw. der vorbestimmten Strecke ein Ausrollvorgang, insbesondere im Rahmen eines Schleppmanövers oder eines Segelmanövers, schlichtweg fortgesetzt werden, so dass man sich langsam der Zielgeschwindigkeit annähert.

Zweckmäßigerweise kann die Regelung auf die Zwischengeschwindigkeit nur nach Auswahl einer entsprechenden Bedienoption durch den Fahrer erfolgen. Das bedeutet, den hier beschriebenen "Toleranzmodus", der sowohl hinsichtlich der Energieeffizienz als auch hinsichtlich des Komforts für den Fahrer, der eine Offsetgeschwindigkeit wählen möchte, Vorteile mit sich bringt, wird vom Fahrer als Betriebsmodus gezielt durch eine Bedienoption angewählt. Ist der Toleranz-Betriebsmodus nicht aktiv, so wird wie üblich schon an der Begrenzung der Betriebsumgebung, auf die die Zielgeschwindigkeit bezogen ist, die Zielgeschwindigkeit als Regelgeschwindigkeit erreicht und eingestellt. Eine derartige Bedienoption kann beispielsweise an einer Mensch-Maschine-Schnittstelle (MMI) des Kraftfahrzeugs vorgenommen werden.

Neben dem Verfahren betrifft die Erfindung auch ein Kraftfahrzeug, aufweisend ein längsführendes Fahrerassistenzsystem mit einem zur Durchführung des erfindungsgemäßen Verfahrens ausgebildeten Steuergerät. Sämtliche Ausführungen bezüglich des erfindungsgemäßen Verfahrens lassen sich analog auf das erfindungsgemäße Kraftfahrzeug übertragen, mit welchem die bereits genannten Vorteile ebenso erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Ablaufplan eines Ausführungsbeispiels des erfindungsgemäßen Verfahrens,
- Fig. 2: einen zeitlichen Verlauf einer Geschwindigkeit vor und nach Erreichen einer Betriebsumgebung, für die eine Zielgeschwindigkeit als Regelgeschwindigkeit vorgegeben werden soll, und
- Fig. 3: ein erfindungsgemäßes Kraftfahrzeug.

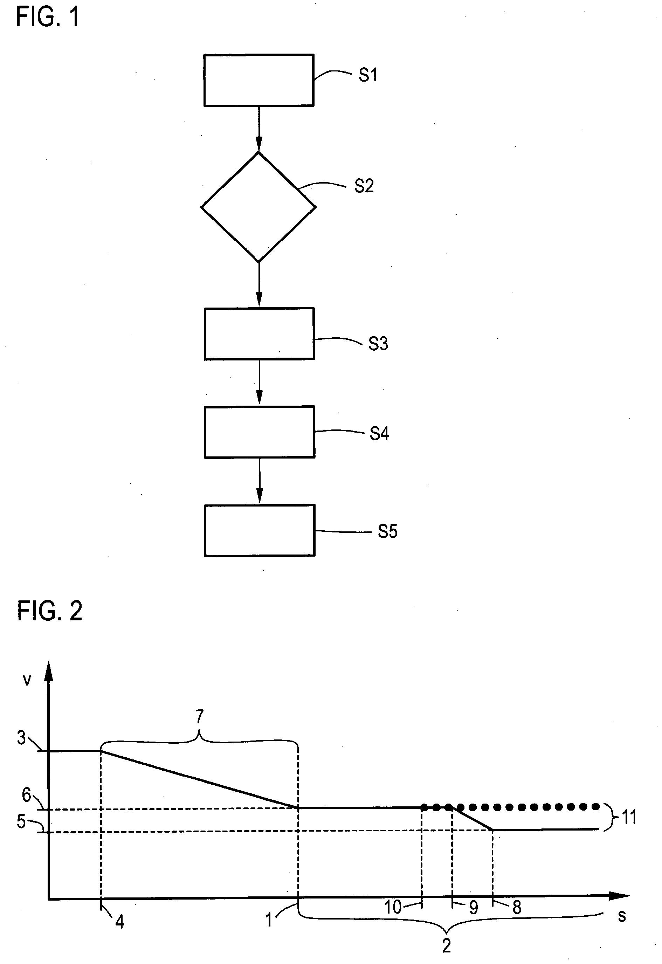

Fig. 1 zeigt einen Ablaufplan eines Ausführungsbeispiels des erfindungsgemäßen Verfahrens, welches in den grundsätzlich bekannten, üblichen Betrieb eines längsführenden Fahrerassistenzsystems eingebettet ist, welches in der Lage ist, auf für bestimmte vorausliegende Betriebsumgebungen, insbesondere Streckenabschnitte, vorgegebene Zielgeschwindigkeiten zu reagieren, indem innerhalb dieser Betriebsumgebung die Zielgeschwindigkeit als Regelgeschwindigkeit verwendet wird. Ausgestaltungen hierzu, die mit digitalen Kartendaten eines Navigationssystems und/oder Kameradaten einer in dem Kraftfahrzeug verbauten Kamera arbeiten können, sind im Stand der Technik bereits bekannt und sollen hier nicht näher dargelegt werden.

In einem Schritt S1 wird mithin erkannt, dass eine Betriebsumgebung vorausliegt, für die eine vorgegebene Zielgeschwindigkeit, beispielsweise eine Geschwindigkeitsbegrenzung, bekannt ist, die niedriger ist als die eingestellte Wunschgeschwindigkeit des Fahrers, auf die das längsführende Fahrerassistenzsystem üblicherweise als Regelgeschwindigkeit regeln soll, wenn keine niedrigeren vorgegebenen Zielgeschwindigkeiten in der aktuellen Betriebsumgebung vorliegen.

In einem Schritt S2 wird sodann überprüft, ob der Fahrer über eine entsprechende Bedienoption einen Toleranz-Betriebsmodus angewählt hat. Ist dies nicht der Fall, wird, in Fig. 1 der Übersichtlichkeit halber nicht näher dargestellt, wie bekannt unmittelbar mit Erreichen der Begrenzung der vorausliegenden Betriebsumgebung auf die Zielgeschwindigkeit geregelt.

Ist jedoch der Toleranz-Betriebsmodus aktiv, wird in einem Schritt S3 eine Zwischengeschwindigkeit bestimmt. Diese liegt, nachdem üblicherweise die Zielgeschwindigkeit niedriger als die aktuelle Geschwindigkeit des Kraftfahrzeugs, insbesondere die Wunschgeschwindigkeit, ist, meist oberhalb der Zielgeschwindigkeit, kann jedoch auch unterhalb der Zielgeschwindigkeit liegen, beispielsweise dann, wenn von einer Betriebsumgebung mit einer niedrigeren Zielgeschwindigkeit in eine Betriebsumgebung mit einer höheren Zielgeschwindigkeit, die jedoch noch immer niedriger als die Wunschgeschwindigkeit ist, gewechselt wird. Das hier dargestellte Ausführungsbeispiel stellt jedoch hauptsächlich auf den Fall ab, in dem das Kraftfahrzeug vor Erreichen der vorausliegenden Betriebsumgebung abgebremst werden soll.

Zur Bestimmung einer Zwischengeschwindigkeit, die dann zwischen der Zielgeschwindigkeit und der aktuellen Geschwindigkeit des Kraftfahrzeugs liegen sollte, sind verschiedene Varianten denkbar, wobei in einer einfach ausgestalteten Ausführungsform die Zwischengeschwindigkeit um einen vorbestimmten Prozentwert als Offsetwert höher als die Zielgeschwindigkeit gewählt werden kann. Die Zwischengeschwindigkeit kann jedoch auch in die Ermittlung einer energieeffizienten prädiktiven Betriebsstrategie derart eingebettet werden, dass keine aktiven Bremsvorgänge vor Erreichen der Begrenzung der vorausliegenden Betriebsumgebung notwendig sind, sondern ein Schlepp- oder Segelmanöver bereits ausreichend ist, um die Zwischengeschwindigkeit zu erreichen.

In einem Schritt S4 wird das Kraftfahrzeug dann so betrieben, im hauptsächlichen Anwendungsfall also verlangsamt, dass mit Erreichen der Begrenzung der vorausliegenden Betriebsumgebung, für die die Zielgeschwindigkeit vorgegeben ist, die Zwischengeschwindigkeit erreicht wird. Nach Überfahren der Begrenzung wird erst nach einer vorbestimmten Zeitspanne, alternativ auch einer vorbestimmten Strecke, tatsächlich die Zielgeschwindigkeit erreicht und als Regelgeschwindigkeit verwendet. Der hierdurch entstehende Zeitraum kann durch den Fahrer insbesondere genutzt werden, um eine Offsetgeschwindigkeit über ein Bedienelement zu wählen, was dafür sorgt, dass für die Betriebsumgebung nicht die vorgegebene Zielgeschwindigkeit als Regelgeschwindigkeit verwendet wird, sondern die vorgegebene Zielgeschwindigkeit plus die Offsetgeschwindigkeit. Tritt eine derartige Bedienhandlung auf, wird danach zum Ende des genannten Zeitraums selbstverständlich nicht mehr die Zielgeschwindigkeit angestrebt, sondern die neue, durch die Zielgeschwindigkeit plus die Offsetgeschwindigkeit bestimmte Regelgeschwindigkeit.

Im Schritt S5 wird dann der übliche Betrieb des längsführenden Fahrerassistenzsystems fortgesetzt, sei es mit der Zielgeschwindigkeit als Regelgeschwindigkeit oder der Zielgeschwindigkeit plus der gewählten Offsetgeschwindigkeit als Regelgeschwindigkeit.

Fig. 2 erläutert den letztlich abgestuften Verlangsamungsprozess, den das vorliegende Verfahren realisiert, anhand eines Graphen genauer, in dem die Geschwindigkeit v des Kraftfahrzeugs gegen die zurückgelegte Strecke s gezeigt ist, wobei besonders die Begrenzung 1 der vorausliegenden Betriebsumgebung 2 hervorgehoben ist. Im in Fig. 2 gezeigten Ausführungsbeispiel ist die Regelgeschwindigkeit vor Erreichen der Betriebsumgebung 2 die vom Fahrer eingestellte Wunschgeschwindigkeit 3. Zu einem Zeitpunkt, der einer Position 4 entspricht, wurde vom längsführenden Fahrerassistenzsystem erkannt, dass die Betriebsumgebung 2 vorausliegt, in der die Zielgeschwindigkeit 5, beispielsweise 50 km/h, vorgegeben ist. Der nun erfolgende Verlangsamungsvorgang erfolgt jedoch nicht auf diese Zielgeschwindigkeit 5 hin, sondern auf die Zwischengeschwindigkeit 6, die höher als die Zielgeschwindigkeit 5 ist, wobei vorliegend der Verlangsamungsvorgang 7 durch ein reines Schleppmanöver des Kraftfahrzeugs erfolgen kann. Mit Erreichen der Begrenzung 1 ist mithin die Zwischengeschwindigkeit 6, welche beispielsweise bei 55 km/h liegen kann, erreicht. Entweder durch eine vorbestimmte Zeitspanne oder eine vorbestimmte Strecke definiert existiert nun eine Position 8, zu der, wenn keine weiteren Bedienaktionen des Fahrers erfolgen, die Zielgeschwindigkeit 5 erreicht sein soll und als Regelgeschwindigkeit verwendet werden soll. Hierfür wird nun nach Erreichen der Begrenzung 1 zunächst wenigstens von oben her weiter auf die Zwischengeschwindigkeit 6 geregelt, bis, falls der Fahrer keine Bedienaktion vornimmt, an einer Position 9 der Zeitpunkt erreicht ist, zu dem durch ein weiteres Schleppmanöver sichergestellt werden kann, dass an der Position 8 die Zielgeschwindigkeit 5 erreicht ist, die sodann auch als Regelgeschwindigkeit verwendet wird. Der entsprechende Geschwindigkeitsverlauf ist durch die durchgezogene Linie in Fig. 2 gezeigt.

Betätigt der Fahrer jedoch während des Regelns auf die Zwischengeschwindigkeit 6 ein Bedienelement, beispielsweise zu einem Zeitpunkt, der der Position 10 entspricht, und stellt er dabei eine Offsetgeschwindigkeit von 5 km/h ein, entspricht die Zielgeschwindigkeit plus der Offsetgeschwindigkeit 11 hier der Zwischengeschwindigkeit 6, so dass schlichtweg weiter ohne einen weiteren notwendigen Verlangsamungs- oder Beschleunigungsvorgang auf diese Zwischengeschwindigkeit 6 geregelt werden kann, was durch den gepunkteten Verlauf angedeutet ist. Dabei ist es selbstverständlich zweckmäßig, wenn sich die Zwischengeschwindigkeit 6 (gegebenenfalls auch) auf eine häufig genutzte, eingestellte Offsetgeschwindigkeit bzw. allgemein einstellbare Offsetgeschwindigkeit bezieht.

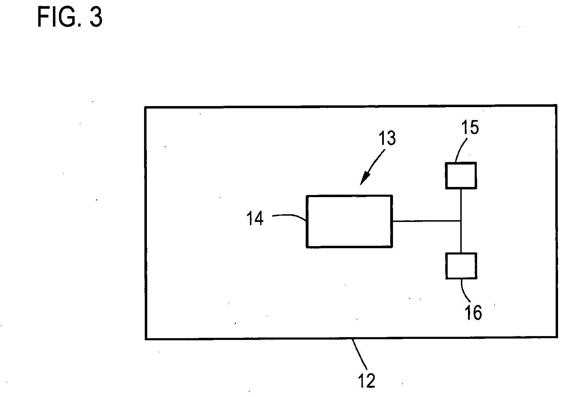

Fig. 3 zeigt schließlich eine Prinzipskizze eines erfindungsgemäßen Kraftfahrzeugs 12. Dieses umfasst ein längsführendes Fahrerassistenzsystem 13, insbesondere eine Geschwindigkeitsregelanlage (GRA) oder ein ACC-System. Das Fahrerassistenzsystem 13 weist ein Steuergerät 14 auf, das zur Durchführung des erfindungsgemäßen Verfahrens ausgebildet ist. Insbesondere erhält das Steuergerät 14 Daten von einem bevorzugt als Hebel ausgebildeten Bedienelement 15, über das Offsetgeschwindigkeiten anwählbar sind, und von einem Mensch-Maschine-Interface 16, in dem die Bedienoption des Toleranz-Betriebsmodus anwählbar ist. Selbstverständlich weist das Kraftfahrzeug 12 auch die weiteren üblichen Komponenten auf, die jedoch der Übersichtlichkeit halber hier nicht näher dargestellt sind.

## Patentansprüche

1. Verfahren zum Betrieb eines längsführenden Fahrerassistenzsystems (13) eines Kraftfahrzeugs (12), welches zur Regelung der Geschwindigkeit des Kraftfahrzeugs (12) auf eine Regelgeschwindigkeit ausgebildet ist, wobei die Regelgeschwindigkeit in Abhängigkeit von die Betriebsumgebung, in der das Kraftfahrzeug (12) aktuell betrieben wird, beschreibenden Umgebungsdaten von einer fahrerseitig vorgegebenen Wunschgeschwindigkeit (3) auf eine für eine vorausliegende Betriebsumgebung (2) vorgegebene und/oder aus den Umgebungsdaten ermittelbare Zielgeschwindigkeit (5) veränderbar ist,
**dadurch gekennzeichnet,**
**dass** bei einer Änderung der Regelgeschwindigkeit auf eine neue Zielgeschwindigkeit (5) für eine vorausliegende Betriebsumgebung (2) zunächst für eine vorbestimmte Zeitspanne und/oder eine vorbestimmte Strecke in der vorausliegenden Betriebsumgebung (2) auf eine zur aktuellen Geschwindigkeit des Kraftfahrzeugs (12) hin von der Zielgeschwindigkeit (5) abweichende Zwischengeschwindigkeit (6), die zwischen der aktuellen Geschwindigkeit des Kraftfahrzeugs (12) und der Zielgeschwindigkeit (5) liegt, geregelt wird, ehe nach Ablauf der Zeitspanne bzw. Überfahren der Strecke auf die Zielgeschwindigkeit (5) geregelt wird.

2. Verfahren nach Anspruch 1,
**dadurch gekennzeichnet,**
**dass** fahrerseitig eine Offsetgeschwindigkeit (11) für die Betriebsumgebung (2) einstellbar ist, wobei nach Wahl einer Offsetgeschwindigkeit (11) in der Betriebsumgebung (2) als Regelgeschwindigkeit statt der Zielgeschwindigkeit (5) die Zielgeschwindigkeit (5) plus die Offsetgeschwindigkeit (11) gewählt wird.

3. Verfahren nach Anspruch 1 oder 2,
**dadurch gekennzeichnet,**
**dass** die Zwischengeschwindigkeit (6) aus einem Toleranzintervall um die Zielgeschwindigkeit (5) als eine entsprechende Grenze desselben ermittelt wird und/oder die Zwischengeschwindigkeit (6), insbesondere in Form eines Toleranzintervalls, fahrerseitig einstellbar ist.

4. Verfahren nach einem der vorangehenden Ansprüche,
**dadurch gekennzeichnet,**
**dass** die Zwischengeschwindigkeit (6) in Abhängigkeit von den und/oder weiteren Umgebungsdaten und/oder von der Zielgeschwindigkeit (5) und/oder der aktuellen Geschwindigkeit und/oder sonstigen Betriebsdaten des Kraftfahrzeugs (12) gewählt wird.

5. Verfahren nach einem der vorangehenden Ansprüche,
**dadurch gekennzeichnet,**
**dass** auf die Zwischengeschwindigkeit (6) nur von der der aktuellen Geschwindigkeit des Kraftfahrzeugs (12) zu Beginn der Regelung auf die Zwischengeschwindigkeit (6) zugewandten Seite oder auf ein Geschwindigkeitsintervall, das aus der Zwischengeschwindigkeit (6) und der Zielgeschwindigkeit (5) gebildet wird, geregelt wird.

6. Verfahren nach einem der vorangehenden Ansprüche,
**dadurch gekennzeichnet,**
**dass** die Regelung auf die Zwischengeschwindigkeit (6) nur nach Anwahl einer entsprechenden Bedienoption durch den Fahrer erfolgt.

7. Verfahren nach einem der vorangehenden Ansprüche,
**dadurch gekennzeichnet,**
**dass** auf das Erreichen der Zwischengeschwindigkeit (5) mit Erreichen einer Begrenzung (1) der vorausliegenden Betriebsumgebung (2) geregelt wird.

8. Kraftfahrzeug (12), aufweisend ein längsführendes Fahrerassistenzsystem (13) mit einem zur Durchführung eines Verfahrens nach einem der vorangehenden Ansprüche ausgebildeten Steuergerät (14).

## Claims

1. Method for operating a longitudinally guiding driver assistance system (13) of a motor vehicle (12) which is designed to regulate the speed of the motor vehicle (12) to a regulated speed,
wherein the regulated speed can be changed depending on environment data describing the operating environment in which the motor vehicle (12) is currently being operated, from a driver-side predetermined desired speed (3) to a target speed (5) which is predetermined for an operating environment (2) lying ahead and/or which is detectable from the environment data,
**characterised in**
**that** with a change of the regulated speed to a new target speed (5) for an operating environment (2) lying ahead, regulation occurs first for a predetermined time length and/or a predetermined stretch in the operating environment (2) lying ahead to an interim speed (6) on the way to the current speed of the motor vehicle (12) differing from the target speed (5), which interim speed lies between the current speed of the motor vehicle (12) and the target speed (5), before after the time length has elapsed or the stretch has been covered, regulation occurs to the target speed (5).

2. Method according to claim 1
**characterised in**
**that** on the driver side an offset speed (11) for the operating environment (2) can be set, wherein after selecting an offset speed (11) in the operating environment (2) as regulated speed instead of the target speed (5) the target speed (5) plus the offset speed (11) is selected.

3. Method according to claim 1 or 2,
**characterised in**
**that** the interim speed (6) is determined from a tolerance interval around the target speed (5) as an appropriate limit of same and/or the interim speed (6), in particular in the form of a tolerance interval, can be set on the driver side.

4. Method according to any of the preceding claims,
**characterised in**
**that** the interim speed (6) is selected depending on the and/or further environment data and/or from the target speed (5) and/or the current speed and/or other operating data of the motor vehicle (12).

5. Method according to any of the preceding claims,
**characterised in**
**that** regulation is made to the interim speed (6) only from the side facing the current speed of the motor vehicle (12) at the beginning of the regulation to the interim speed (6), or to a speed interval which is formed from the interim speed (6) and the target speed (5).

6. Method according to any of the preceding claims,
**characterised in**
**that** the regulation to the interim speed (6) takes place only after selection of an appropriate operating option on the part of the driver.

7. Method according to any of the preceding claims,
**characterised in**
**that** regulation is made towards the achieving of the interim speed (5) when a limiting (1) of the operating environment (2) lying ahead is achieved.

8. Motor vehicle (12) having a longitudinally guiding driver assistance system (13) with a control device (14) designed to carry out the method according to any of the preceding claims.

## Revendications

1. Procédé de fonctionnement d'un système d'assistance au conducteur (13) de guidage longitudinal d'un véhicule automobile (12), lequel système est conçu pour réguler la vitesse du véhicule automobile (12) sur une vitesse de régulation,
dans lequel, en fonction de données d'environnement décrivant l'environnement de fonctionnement dans lequel le véhicule automobile (12) fonctionne actuellement, la vitesse de régulation est modifiable par une vitesse souhaitée (3) prescrite côté conducteur en une vitesse cible (5) prescrite pour un environnement de fonctionnement (2) à venir et/ou pouvant être déterminée à partir des données d'environnement,
**caractérisé en ce**
**que**, lors d'une modification de la vitesse de régulation en une nouvelle vitesse cible (5) pour un environnement de fonctionnement (2) à venir, on régule d'abord, pour un intervalle de temps prédéterminé et/ou pour un trajet prédéterminé dans l'environnement de fonctionnement (2) à venir, sur une vitesse intermédiaire (6) qui s'écarte de la vitesse cible (5) vers la vitesse actuelle du véhicule automobile (12) et qui se situe entre la vitesse actuelle du véhicule automobile (12) et la vitesse cible (5) avant de réguler, après l'expiration de l'intervalle de temps ou après le parcours du trajet, sur la vitesse cible (5).

2. Procédé selon la revendication 1,
**caractérisé en ce**
**que**, côté conducteur, une vitesse de décalage (11) est réglable pour l'environnement de fonctionnement (2), la vitesse cible (5) plus la vitesse de décalage (11) étant choisie comme vitesse de régulation à la place de la vitesse cible (5) après le choix d'une vitesse de décalage (11) dans l'environnement de fonctionnement (2).

3. Procédé selon la revendication 1 ou 2,
**caractérisé en ce**
**que** la vitesse intermédiaire (6) est déterminée à partir d'un intervalle de tolérance autour de la vitesse cible (5) comme étant une limite correspondante de celle-ci et/ou la vitesse cible (6) est réglable côté conducteur, en particulier sous la forme d'un intervalle de tolérance.

4. Procédé selon l'une quelconque des revendications précédentes,
**caractérisé en ce**
**que** la vitesse intermédiaire (6) est choisie en fonction des données d'environnement et/ou d'autres données d'environnement et/ou de la vitesse cible (5) et/ou de la vitesse actuelle et/ou d'autres données de fonctionnement du véhicule automobile (12).

5. Procédé selon l'une quelconque des revendications précédentes,
**caractérisé en ce**
**que** la vitesse est régulée sur la vitesse intermédiaire (6) seulement du côté proche de la vitesse actuelle du véhicule automobile (12) au début de la régulation sur la vitesse intermédiaire (6) ou est régulée sur un intervalle de vitesse qui est formé à partir de la vitesse intermédiaire (6) et de la vitesse cible (5).

6. Procédé selon l'une quelconque des revendications précédentes,
**caractérisé en ce**
**que** la régulation sur la vitesse intermédiaire (6) est effectuée seulement après le choix d'une option de commande correspondante par le conducteur.

7. Procédé selon l'une quelconque des revendications précédentes,
**caractérisé en ce**
**que** la régulation s'effectue sur l'obtention de la vitesse intermédiaire (5) lorsqu'une limitation (1) de l'environnement de fonctionnement (2) à venir est atteinte.

8. Véhicule automobile (12), comportant un système d'assistance au conducteur (13) de guidage longitudinal avec un appareil de commande (14) conçu pour mettre en oeuvre un procédé selon l'une quelconque des revendications précédentes.
